# EUROPEAN PATENT APPLICATION

(11) **EP 3 954 553 A1**
(43) Date of publication of application: **16.02.2022**
(21) Application number: 21198981.9
(22) Date of filing: 19.02.2018
(51) Int. Cl.: B60C 23/00, B60C 23/10, B60B 19/14, B60K 7/00, B60B 33/00

(54) **LOAD CARRYING DEVICE**

(30) Priority: 21.02.2017 GB 201702802
(62) Divisional of application: 18706848.1
(71) Applicant: Area 52 Limited, Aberdeenshire AB39 2DB (GB)
(72) Inventor: TUTT, Matthew Karl, Stonehaven, AB39 2DB (GB); SENIOR, Stephen Paul Wilding, Stonehaven, AB39 2DB (GB)
(74) Representative: Appleyard Lees IP LLP

(57) **Abstract**

A load carrying device comprises a load carrying portion, a roller and an inflation arrangement in connection with the roller for selectively inflating the roller from a deflated state to an inflated state and for selectively deflating the roller from the inflated state to the deflated state, the roller rotatable to allow movement of the load carrying device, the roller comprising: an attachment arrangement attaching the roller to the load carrying portion so that the roller provides support to the load carrying portion; and a body for contacting a surface on which the load carrying device is located, the load carrying device characterized by a first motor operable to rotate the roller to move the load carrying device.

## Description

The invention relates to a load carrying device and a roller for a load carrying device.

Load carrying devices (such as prams and golf trolleys) typically include wheels to support the load carrying device and to allow movement of the device by rotation of the wheels. Wheels can be bulky, which means that they take up a lot of space when storing or transporting a load carrying device. Additionally, the ride provided to the load carrying device by wheels can be firm, and it can be difficult to manoeuvre load carrying devices having wheels on some terrain (such as steps, stairs, kerbs, sand, grass and onto/off public transport).

According to a first aspect of the invention, there is provided a load carrying device comprising a load carrying portion, a roller and an inflation arrangement in connection with the roller for selectively inflating the roller from a deflated state to an inflated state and for selectively deflating the roller from the inflated state to the deflated state, the roller rotatable to allow movement of the load carrying device, the roller comprising: an attachment arrangement attaching the roller to the load carrying portion so that the roller provides support to the load carrying portion; and a body for contacting a surface on which the load carrying device is located.

The load carrying device is advantageous as it means that when the load carrying device is not being used for load carrying, the inflation arrangement can be operated to deflate the roller to its deflated state, so that the load carrying device takes up less space during storage or transportation of the load carrying device. Additionally, the inflated roller offers increased shock absorption. Having the inflation arrangement in connection with the roller means that the inflation arrangement can be operated to selectively inflate/deflate the roller without needing to connect/disconnect the inflation arrangement to/from the roller in between using the load carrying device and storing the loading carrying device. Typically, the connection between the inflation arrangement and the roller is fluid communication between the inflation arrangement and the body of the roller. However, the connection between the inflation arrangement and the roller may be an electrical or mechanical connection. The electrical connection may be a wireless connection.

In one example, the roller is a ball. The ball provides a softer ride for the load carrying device. Additionally, the ball means that the load carrying device can be pushed more easily over uneven terrain such as steps, stairs, kerbs, sand, grass and onto/off public transport. Additionally, the ball reduces damage to surfaces such as fine turf.

In one example, the attachment arrangement comprises at least one connector connecting to an axle of the roller. The axle provides a simple to manufacture arrangement for attaching the roller to the load carrying portion while allowing the roller to rotate.

In one example, the inflation arrangement provides the axle. This reduces the space required within the roller for the inflation arrangement/axle, allowing a greater inflation volume to be provided, thereby providing a softer ride, and makes the inflation arrangement/axle to occupy a smaller footprint, which reduces the weight and likelihood of damage of the load carrying device.

In one example, the inflation arrangement extends across a width of the roller. This provides greater stability and allows the inflation arrangement to be fixed in position with respect to the roller more easily.

In one example, the inflation arrangement is at least partially located within the roller. This reduces space occupied by the inflation arrangement in the load carrying device and reduces the likelihood of interference of the inflation arrangement with the load carrying portion. Having some of the inflation arrangement located outside the roller allows it to be accessed more easily by the user. In one example, the inflation arrangement is fully located within the roller. This further reduces space occupied by the inflation arrangement in the load carrying device and reduces the likelihood of interfere of the inflation arrangement with the load carrying portion.

In one example, the inflation arrangement comprises a first guard member on a first end cap of the inflation arrangement, the first guard member extending outwardly from the inflation arrangement to protect the inflation arrangement from radial or sideways impact.

In one example, the inflation arrangement comprises a second guard member on a second end cap of the inflation arrangement, the second guard member extending outwardly from the inflation arrangement to protect the inflation arrangement from radial or sideways impact.

In one example, the inflation arrangement is a module removable from the roller. This means that if one of the roller or the inflation arrangement is damaged or broken, it can be easily replaced or repaired independently from the other.

In one example, the body of the roller comprises a first port, the inflation arrangement insertable into and removable from the roller through the first port. This provides a simple and easy to manufacture means by which the inflation arrangement is removable from the roller. The first port also provides access to the inflation arrangement.

In one example, the body of the roller comprises a second port, wherein the first end cap is located at the first port and the second end cap is located at the second port. The second port provides further access to the inflation arrangement.

In one example, the second cap has a larger diameter than the second port and a smaller diameter than the first port. This means that the inflation arrangement is insertable into and removable from the roller through the first port (by inserting the second cap through the first port), but the inflation arrangement cannot be moved out of the roller through the second port (as the second cap cannot pass through the second port), thereby helping to retain the inflation arrangement within the roller.

In one example, the first cap has a larger diameter than the first port. This prevents the first cap being inserted through the first port, thereby helping the inflation arrangement to be inserted in the correct position in the roller.

In one example, the inflation arrangement comprises a pump. This is a simple and rapid means for inflating and/or deflating the roller.

In one example, the inflation arrangement comprises first and second valves, the pump switchable between: an inflating mode, wherein the pump supplies air to the body through the first and second valves to inflate the roller; and a deflating mode, wherein the pump draws air from the body through the second and first valves to deflate the roller. Using first and second valvles in this way provides a reliable and simple means by which the roller can be inflated and can be readily retained in the deflated state.

In one example, the first and second valves are shuttle valves, the first valve comprising: a first valve first opening, opening external to the roller; a first valve second opening, opening to a suction side of the pump; and a first valve third opening, opening to the body, wherein the second valve comprises: a second valve first opening, opening external to the roller; a second valve second opening, opening to a pressure side of the pump; and a second valve third opening, opening to the body, wherein in the inflating mode, the first valve permits fluid between the first valve first opening and the first valve second opening and the second valve permits fluid flow between the second valve second opening and the second valve third opening, and, in the deflating mode, the first valve permits fluid flow between the first valve third opening and the first valve second opening and the second valve permits fluid flow between the second valve second opening and the second valve first opening.

Using this arrangement of the two valves means that the pump can be driven in one direction and remain in the same position, but can inflate and deflate the roller by switching the pump. Additionally, the pump is located within a chamber of the inflation arrangement. This simplifies the construction of the inflation arrangement.

In one example, the first valve and the second valve are operable by mechanical linkage. In one example, the first valve and the second valve are operable by (e.g. remote) electrical, mechanical, or electromechanical actuation. This allows the first valve and the second valve to be operated remotely (e.g. from a handle of the load carrying device).

In one example, each of the first valve and the second valve is located in a respective one of a first end cap and a second end cap of the inflation arrangement. This allows the valves to be positioned close to the surface of the roller so that they may more easily draw/supply air to/from the outside, and/or be accessed by a user or control devices.

In one example, the roller comprises a plurality of structural members. In one example, each of the structural member extends circumferentially around the roller when the roller is inflated. This provides further structural support to the roller when the roller is in the inflated state and/or guides inflation/deflation of the ball.

In one example, each of the structural members extends parallel to the inflation arrangement when the roller is in the deflated state.

In one example, wherein the pump is driven by a first motor and operation of the first motor is controlled by a pressure sensor.

In one example, the load carrying device comprises a second motor operable to rotate the roller to move the load carrying device. This means that the load carrying device can be driven, reducing the effort required by the user of the load carrying device.

In one example, the load carrying device comprises a third motor operable to rotate the roller to move the load carrying device, wherein the second motor is located at the first end cap and the third motor is located at the second end cap. This provides more even driving of the roller and more balanced loading on the roller.

In one example, the body of the roller is made from a puncture resistant material.

In one example, the load carrying device is a pram/buggy, for carrying young children. The roller means that the pram can be pushed more easily over uneven terrain such as steps, stairs, kerbs, sand, grass and onto/off public transport. The pram/buggy is advantageous as it means that when the pram/buggy is not being used for load carrying, the inflation arrangement can be operated to deflate the roller to its deflated state, so that the pram/buggy takes up less space during storage or transportation of the pram/buggy, for example in a car boot. Additionally, the inflated roller offers increased shock absorption.

In one example, the load carrying device is a golf trolley/buggy, for carrying golf clubs. The roller means that the golf trolley can be pushed more easily over uneven terrain and reduces damage to surfaces such as fine turf on a golf course. The golf trolley/buggy is advantageous as it means that when the golf trolley/buggy is not being used for load carrying, the inflation arrangement can be operated to deflate the roller to its deflated state, so that the golf trolley/buggy takes up less space during storage or transportation of the golf trolley/buggy, for example in a car boot. Additionally, the inflated roller offers increased shock absorption.

According to a second aspect of the invention, there is provided a kit of parts for a load carrying device, the load carrying device comprising a load carrying portion and a roller, the kit of parts comprising: an arrangement for attaching the roller to the load carrying portion so that the roller provides support to the load carrying portion; a body of the roller for contacting a surface on which the load carrying device is located; and an inflation arrangement in connection with the roller for selectively inflating the roller from a deflated state to an inflated state and selectively deflating the roller from the inflated state to the deflated state, wherein the roller is rotatable in use to allow movement of the load carrying device. The parts of the kit of parts can be assembled to give a load carrying device having the features and advantages described above.

According to a third aspect of the invention, there is provided a roller for a load carrying device, the roller comprising: an arrangement for attaching the roller to a load carrying portion of the load carrying device so that the roller provides support to the load carrying portion; a body for contacting a surface on which the load carrying device is located; and an inflation arrangement for selectively inflating the roller from a deflated state to an inflated state and selectively deflating the roller from the inflated state to the deflated state, wherein the roller is rotatable in use to allow movement of the load carrying device.

The roller is advantageous when used with a load carrying device as it means that when the load carrying device is not being used for load carrying, the inflation arrangement can be operated to deflate the roller to its deflated state, so that the load carrying device takes up less space during storage or transportation of the load carrying device. In one example, the inflation arrangement is in (e.g. permanent) connection with the roller for selectively inflating the roller from a deflated state to an inflated state and for selectively deflating the roller from the inflated state to the deflated state. The connection might be such that free rotation of the roller is possible.

In one example, the roller is a ball. The ball provides a softer ride for the load carrying device. Additionally, when used with the load carrying device, the ball allows the load carrying device to be pushed more easily over uneven terrain such as steps, stairs, kerbs, sand, grass and onto/off public transport. Additionally, the ball reduces damage to surfaces such as fine turf.

In one example, the attachment arrangement comprises at least one connector connecting to an axle of the roller. The axle provides a simple to manufacture arrangement for attaching the roller to the load carrying portion while allowing the roller to rotate.

In one example, the inflation arrangement provides the axle. This reduces the space required within the roller for the inflation arrangement/axle, allowing a greater inflation volume to be provided, thereby providing a softer ride and makes the inflation arrangement/axle occupy a smaller footprint, which reduces the weight and likelihood of damage of the load carrying device.

In one example, the inflation arrangement is at least partially located within the roller. When the roller is attached to the load carrying device, this reduces space occupied by the inflation arrangement in the load carrying device and reduces the likelihood of interference of the inflation arrangement with the load carrying portion. Having some of the inflation arrangement located outside the roller allows it to be accessed more easily by the user. In one example, the inflation arrangement is fully located within the roller. This further reduces space occupied by the inflation arrangement in the load carrying device and reduces the likelihood of interfere of the inflation arrangement with the load carrying portion.

In one example, the inflation arrangement comprises a first guard member on the first end cap of the inflation arrangement, the first guard member extending outwardly from the inflation arrangement to protect the inflation arrangement from radial or sideways impact.

In one example, the inflation arrangement comprises a second guard member on the second end cap of the inflation arrangement, the second guard member extending outwardly from the inflation arrangement to protect the inflation arrangement from radial or sideways impact.

In one example, the inflation arrangement is a module removable from the roller. This means that if one of the roller or the inflation arrangement is damaged or broken, it can be easily replaced or repaired independently from the other.

In one example, the body of the roller comprises a first port, the inflation arrangement insertable into and removable from the roller through the first port. This provides a simple and easy to manufacture means by which the inflation arrangement is removable from the roller. The first port also provides access to the inflation arrangement.

In one example, the body of the roller comprises a second port, wherein the first end cap is located at the first port and the second end cap is located at the second port. The second port provides further access to the inflation arrangement.

In one example, the second cap has a larger diameter than the second port and a smaller diameter than the first port. This means that the inflation arrangement is insertable into and removable from the roller through the first port (by inserting the second cap through the first port), but the inflation arrangement cannot be moved out of the roller through the second port (as the second cap cannot pass through the second port), thereby helping to retain the inflation arrangement within the roller.

In one example, the first cap has a larger diameter than the first port. This prevents the first cap being inserted through the first port, thereby helping the inflation arrangement to be inserted in its correct position in the roller.

In one example, the inflation arrangement comprises a pump. This is a simple and rapid means for inflating and/or deflating the roller.

In one example, the inflation arrangement comprises first and second valves, the pump switchable between: an inflating mode, wherein the pump supplies air to the body through the first and second valves to inflate the roller; and a deflating mode, wherein the pump draws air from the body through the second and first valves to deflate the roller. Using first and second valves in this way provides a reliable and simple means by which the roller can be inflated and can be readily retained in the deflated state.

In one example, the first and second valves are shuttle valves, the first valve comprising: a first valve first opening, opening external to the roller; a first valve second opening, opening to a suction side of the pump; and a first valve third opening, opening to the body, wherein the second valve comprises: a second valve first opening, opening external to the roller; a second valve second opening, opening to a pressure side of the pump; and a second valve third opening, opening to the body, wherein in the inflating mode, the first valve permits fluid between the first valve first opening and the first valve second opening and the second valve permits fluid flow between the second valve second opening and the second valve third opening, and, in the deflating mode, the first valve permits fluid flow between the first valve third opening and the first valve second opening and the second valve permits fluid flow between the second valve second opening and the second valve first opening. Using this arrangement of the two valves means that the pump can be driven in one direction and remain in the same position, but can inflate and deflate the roller by switching the pump. Additionally, the pump is located within a chamber of the inflation arrangement. This simplifies the construction of the inflation arrangement.

In one example, the first valve and the second valve are operable by mechanical linkage. In one example, the first valve and the second valve are operable by (e.g. remote) electrical, mechanical, or electromechanical actuation. This allows the first valve and the second valve to be operated remotely (e.g. from a handle of the load carrying device).

In one example, the inflation arrangement extends across a width of the roller. This provides greater stability and allows the inflation arrangement to be fixed in position with respect to the roller more easily.

In one example, each of the first valve and the second valve is located in a respective one of a first end cap and a second end cap of the inflation arrangement. This allows the valves to be positioned close to the surface of the roller so that they may more easily draw/supply air to/from the outside, and/or be accessed by a user or control devices.

In one example, the roller comprises a plurality of structural members. In one example, each of the structural member extends circumferentially around the roller when the roller is in the inflated state. This provides further structural support to the roller when the roller is in the inflated state, and/or guides inflation/deflation of the ball.

In one example, each of the structural members extends parallel to the inflation arrangement when the ball is in the deflated state.

In one example, the pump is driven by a first motor and operation of the first motor is controlled by a pressure sensor.

In one example, the roller comprises a second motor operable to rotate the roller to move the load carrying device. This means that the load carrying device can be driven, reducing the effort required by the user of the load carrying device.

In one example, the roller comprises comprising a third motor operable to rotate the roller to move the load carrying device, wherein the second motor is located on the first side of the roller and the third motor is located on the second side of the roller. This provides more even driving of the roller and more balanced loading on the roller.

According to a fourth aspect of the invention, there is provided a pram comprising a load carrying portion and a roller, the roller rotatable to allow movement of the pram, the roller comprising an attachment arrangement attaching the roller to the load carrying portion so that the roller provides support to the load carrying portion in use, wherein the roller is a ball. The ball means that the pram can be pushed more easily over uneven terrain such as steps, stairs, kerbs, sand, grass and onto/off public transport. The load carrying portion comprises a child carrying portion. The fourth aspect of the invention may be employed in combination with any of the features of the first to third aspects as described above.

According to a fifth aspect of the invention, there is provided a golf trolley comprising a load carrying portion and a roller, the roller rotatable to allow movement of the golf trolley, the roller comprising an attachment arrangement attaching the roller to the load carrying portion so that the roller provides support to the load carrying portion in use, wherein the roller is a ball. The ball means that the golf trolley can be pushed more easily over uneven terrain and reduces damage to surfaces such as fine turf on a golf course. The fifth aspect of the invention may be employed in combination with any of the features of the first to third aspects as described above.

For a better understanding of the invention reference is made, by way of example only, to the accompanying drawings, in which:
Fig. 1 is a perspective view of a portion of a load carrying device according to an example;
Fig. 2 is a perspective view of a portion of a roller according to an example;
Fig. 3 is an exploded view of a portion of a load carrying device according to an example;
Fig. 4 is a schematic drawing of a cross-section of a roller according to an example;
Fig. 5 is a schematic drawing of a cross-section of a roller according to an example;
Fig. 6 is a schematic drawing of a cross-section of a roller according to an example;
Fig. 7a is a side view of a pram according to an example; and
Fig. 7b is a front view of a pram according to an example.

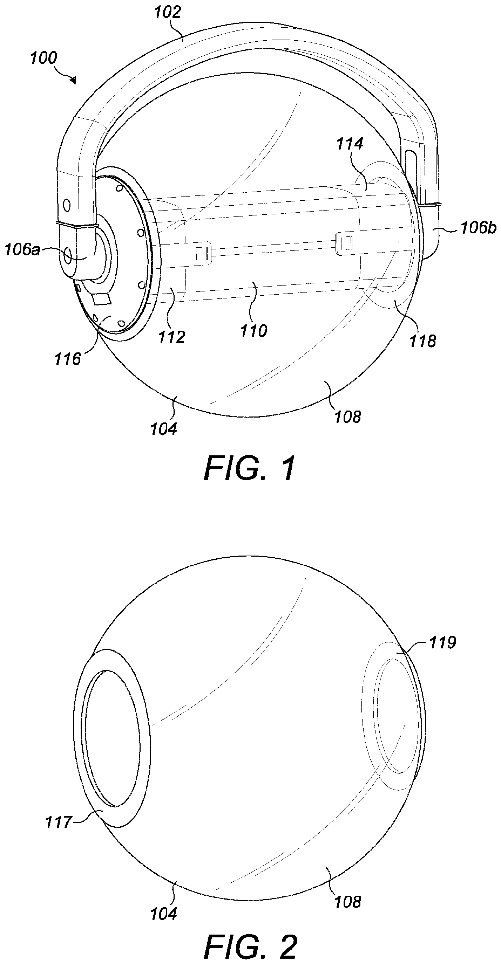

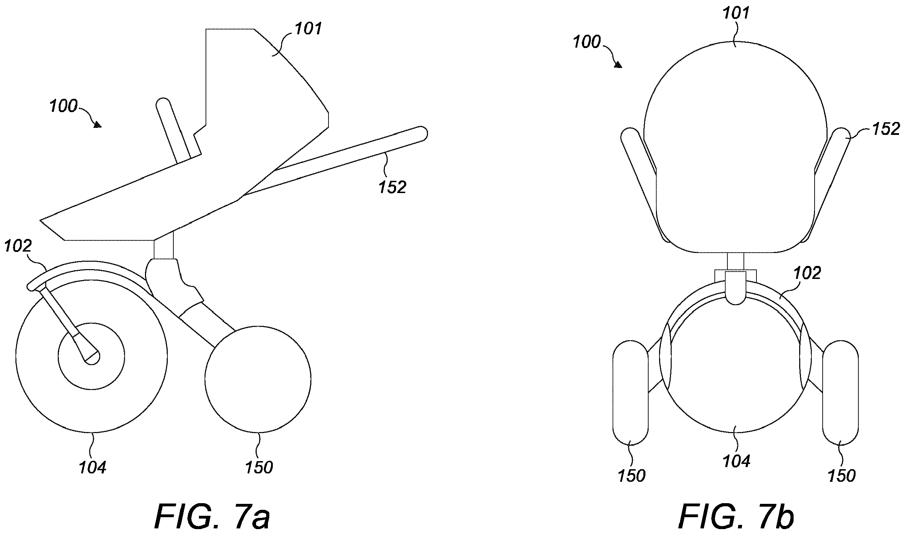

Referring to Fig. 1 there is shown a portion of a load carrying device 100. The load carrying device 100 comprises a load carrying portion, which comprises a frame 102. The load carrying device 100 is described in full below with respect to Fig. 7a and Fig. 7b.

The load carrying device 100 comprises a roller 104. The roller 104 comprises an attachment arrangement 106a 106b, which attaches the roller 104 to the load carrying portion, for example one or more bearings or rotatable joints. The attachment arrangement might also facilitate electrical connection to components with the roller 104, either directly or via apertures/conduits for wires etc. The roller comprises a body 108 and an inflation arrangement 110. The roller 104 is rotatable.

The inflation arrangement 110 is of substantially cuboidal shape. The inflation arrangement 110 provides an axle for the load carrying device 100 and roller 104. The inflation arrangement 110 extends across a width of the roller 104. The inflation arrangement 110 extends across a diameter of the roller 104. The body 108 of the roller 104 rotates relative to the inflation unit 110. The arrangement 106a 106b comprises a first connector 106a and a second connector 106b. The first connector 106a engages a first end of the inflation arrangement 110 while the second connector 106 engages a second end of the inflation arrangement 110, to thereby attach the inflation arrangement 104 to the load carrying portion. Each of the first connector 106a and the second connector 106b comprises a slip ring to provide a connection affording relative rotation between the body 108 and the inflation unit 110.

The inflation arrangement 110 comprises a first end cap 112 at the first end of the inflation arrangement 110. The inflation arrangement 110 comprises a second end cap 114 at the second end of the inflation arrangement 110. The first end cap 112 and second end cap 114 are formed of components separate from a central portion of the inflation arrangement 110. However, it will be appreciated that in other examples, the first end cap 112 and second end cap 114 are integrally formed with the central portion of the inflation arrangement 110.

The first end cap 112 comprises a first guard member 116. The second end cap 114 comprises a second guard member 118. The first and second guard members 116 118 extend outwardly (radially and perpendicular to an axis of rotation of the roller 104) from the inflation arrangement 110. Each of the first and second guard members 116, 118 is of a substantially spherical dome shape.

The roller 104 is a ball, as its body 108 is substantially ball shaped. The body 108 is substantially spherical. The body 108 has a curvature in a direction parallel to the axle which is similar to its curvature in directions normal to the axle. In Fig. 1, the roller 104 is in an inflated state, such that its hollow body 108 is full of air. The body 108 is constructed from a puncture resistant material. The body 108 is constructed from woven nylon reinforced fabric symmetrically coated with uncured polychloroprene rubber.

The roller 104 comprises a plurality of structural members (not shown). Each of the structural members extends circumferentially around the roller 104 when the roller 104 is in the inflated state.

In use, the roller 104 provides support to the load carrying portion, in order to support a load carried by the load carrying portion. It will be appreciated that further support (in addition to the roller 104) is provided to the load carrying portion, as described below with respect to Fig. 7a and Fig. 7b. Therefore, the roller 104 partially supports the load carrying portion. The roller 104 is rotated to move the load carrying device 100.

The inflation arrangement 110 and the axle are substantially horizontal and parallel to a surface which supports the roller 104 (e.g. a floor or surface on which the roller is to roll). The inflation arrangement 110 rotates with the roller 104. Relative rotation occurs between the connectors 106a 106b and the inflation arrangement 110.

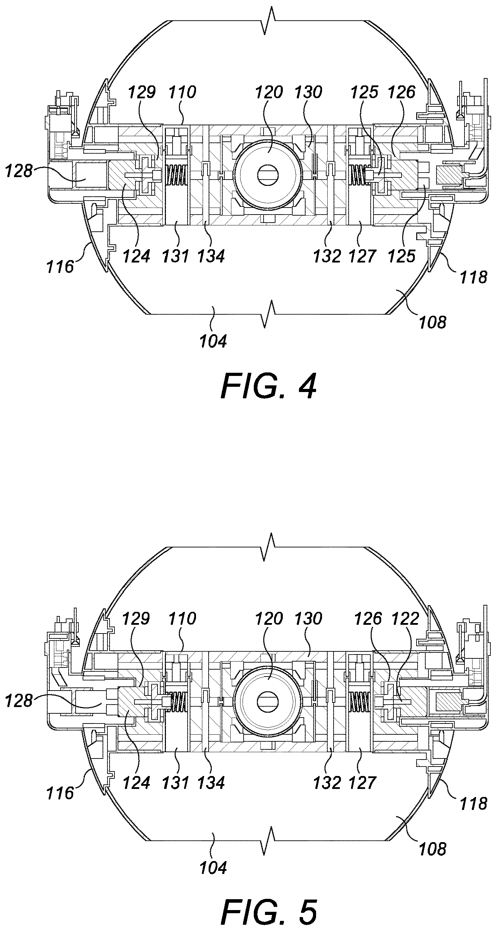

The inflation arrangement 110 is operated to deflate the roller 104 from the inflated state to a deflated state. The inflation arrangement 110 is operated to inflate the roller 104 from the deflated state to the inflated state. The operation of the inflation arrangement 110 to deflate and inflate the roller 104 is described below with respect to Fig. 4 and Fig. 5.

Referring to Fig. 2, there is shown the body 108 of the roller 104. The roller 104 comprises a first port 117 and a second port 119. The first port 117 and the second port 119 are located on opposite sides of the body 108. Each of the first port 117 and the second port 119 is substantially circular. A centre point of the first port 117 is diametrically opposite a centre point of the second port 119 on the body 108. The second port 119 has a diameter which is smaller than a diameter of the first port 117.

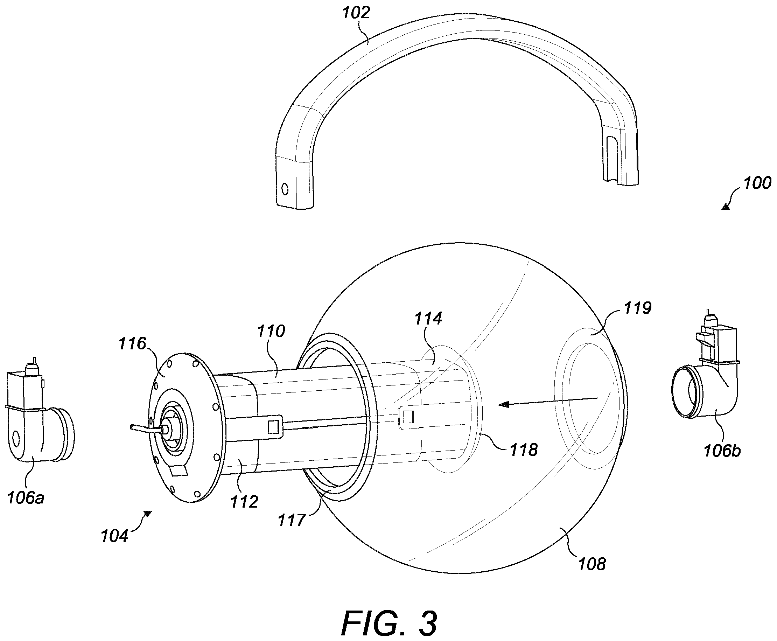

In use, the inflation arrangement 110 is inserted into the roller 104 through the first port 117, as described with reference to Fig. 3. The inflation arrangement 110 is removed from the roller 104 through the first port 117, as described with reference to Fig. 3.

Referring to Fig. 3, there is shown an exploded view of the portion of the load carrying device 100 of Fig. 1. As described above, the roller 104 comprises a first port 117 and a second port 119. The second end cap 114 has a diameter (measured in a direction perpendicular to the axle) which is larger than the second port 119. The second end cap 114 has a diameter which is smaller than the first port 117. It is the second guard member 118 which provides the diameter of the second end cap 114, as the second guard member 118 is the part of the second end cap 114 which extends furthest outwardly from the inflation arrangement 110.

The first end cap 112 has a diameter which is larger than the diameter than the second end cap 114. The first end cap 112 has a diameter which is larger than the first port 117. It is the first guard member 116 which provides the diameter of the first end cap 112, as the first guard member 117 is the part of the first end cap 112 which extends furthest outwardly from the inflation arrangement 110.

In use, as shown in Fig. 3, the inflation arrangement 110 is removed from the roller 104 through the first port 117, as the second end cap 114 passes through the first port 117.

The inflation arrangement 110 is inserted into the roller 104 by inserting the second end cap 114 through the first port 117. The inflation arrangement 110 is inserted until the second end cap 114 abuts the body 108 at the second port 119 and the first end cap 116 abuts the body 108 at the first port 117 (as shown in Fig. 1). The first connector 106a is brought into engagement with the first end cap 112 and the second connector 106b is brought into engagement with the second end cap 114. The first connector 106a and the second connector 106b are connected to the frame 102 to attach the roller 104 to the load carrying portion.

Referring to Fig. 4 and Fig. 5 there are shown schematic drawings of cross-sections of the roller 104. The inflation arrangement 110 comprises a pump 120 located in a chamber 130 of the inflation arrangement 110. The inflation arrangement 110 comprises a motor (not shown) to drive the pump 120. The inflation arrangement 110 is connected to a battery (not shown) to power the motor. The battery is located outside the roller 104 on the frame 102 of the load carrying device 100. The battery is a 24V rechargeable battery.

The inflation arrangement 110 comprises a first valve 122 and a second valve 124. The first valve 122 is a shuttle valve. The second valve 124 is a shuttle valve. The first valve comprises a first valve first opening 125, which is an opening external to the roller 104. The first valve first opening 125 is located at one of the first end cap 112 and the second end cap 114. In the example of Fig. 4 and Fig. 5, the first valve first opening 125 is located in the second end cap 114.

The first valve 122 comprises a first valve second opening 126, which is an opening to a suction side 132 of the chamber 130. The first valve 122 comprises a first valve third opening 127, which is an opening to the body 108 of the roller.

The second valve 124 comprises a second valve first opening 128, which is an opening external to the roller 104. The second valve first opening 128 is located at one of the first end cap 112 and the second end cap 114. In the example of Fig. 4 and Fig. 5, the second valve first opening 128 is located in the first end cap 112. It will be appreciated that in other examples, the chamber 130 of the inflation arrangement 110 is inverted with respect to the rest of the inflation arrangement 110, so that the first valve first opening 125 is located at the second end cap 114 and the second valve first opening 128 is located at the first end cap 112.

The second valve 124 comprises a second valve second opening 129, which is an opening to a pressure side 134 of the chamber 134. The second valve 124 comprises a second valve third opening 131, which is an opening to the body 108.

In use, when the load carrying device 100 is being stored/transported and the roller 104 is in a deflated state (not shown), a shuttle of the first valve 122 and a shuttle of the second valve 124 are in outward positions. This means that the first valve first opening 125 is closed and the second valve first opening 128 is closed. This prevents air flow into and out of the roller 108.

The pump 120 is switched into an inflating mode (as shown in Fig. 4), by pushing the shuttle of the first valve 122 into an inward position and maintaining the shuttle of the second valve 124 in the outward position. The pump 120 is switched into the inflating mode using a switch located on a handle of the load carrying device 100. The switch may communicate wirelessly with the pump 120 and valves 122 124 to switch to the inflating mode.

Pushing the shuttle of the first valve 122 into the inward position opens the first valve first opening 125 and the first valve second opening 126, and closes the first valve third opening 127. Maintaining the shuttle of the second valve 124 in the outward position maintains the second valve second opening 129 and the second valve third opening 131 open and the second valve first opening 128 closed.

The motor drives the pump 120, which draws air from outside through the first valve first opening 125, into the suction side 132 of the chamber 130 through the first valve second opening 126. The pump 120 supplies air to the pressure side 134, thereby supplying air to the body 108 through the second valve second opening 129 and the second valve third opening 131. The inflating mode is automated, such that the inflating mode continues until the body 108 is fully inflated, at which point a pressure sensor (not shown) of the inflation unit 110 senses that the body 108 is fully inflated, the motor switches off and the shuttle of the first valve 122 is returned to the outward position, thereby maintaining the roller 104 in an inflated state. The roller 104 is used to support the load carrying device 100.

The pump 120 is switched into a deflating mode (as shown in Fig. 5), by pushing the shuttle of the second valve 124 into an inward position and maintaining the shuttle of the first valve 122 in the outward position. The pump 120 is switched into the deflating mode using a switch (not shown) located on a handle of the load carrying device 100. The switch may communicate wirelessly with the pump 120 and valves 122 124 to switch to the deflating mode.

Pushing the shuttle of the second valve 124 into the inward position opens the second valve first opening 128 and the second valve second opening 129, and closes the second valve third opening 131. Maintaining the shuttle of the first valve 122 in the outward position maintains the first valve second opening 126 and the first valve third opening 127 open and the first valve first opening 125 closed.

The motor drives the pump 120, which draws air from body 108 through the first valve third opening 127 and the first valve second opening 126, into the suction side 132 of the chamber 130. The pump 120 supplies air to the pressure side 134 thereby supplying air to the outside through the second valve second opening 129 and the second valve first opening 128. The deflating mode is automated, such that the deflating mode continues until the body 108 is fully deflated, at which point the pressure sensor senses that the body 108 is fully deflated, the motor switches off, and the shuttle of the second valve 124 is returned to the outward position, thereby maintaining the roller 104 in a deflated state.

In other words, in the inflating mode, the first valve 122 is closed to the body 108 and is open to the outside. The second valve 124 is closed to the outside and is open to the body 108. The pump 120 draws air from the outside through the first valve 122 into the suction side 132 of the chamber. The pump 120 supplies air into the pressure side 134. Air flows from the pressure side 134 through the second valve 124 into the body 108.

In the deflating mode, the first valve 122 is closed to the outside and is open to the body 108. The second valve 124 is closed to the body 108 and is open to the outside. The pump 120 draws air from the body 108, through the first valve 122 and the suction side 132 of the chamber. The pump 120 supplies air to the pressure side 134 of the chamber. Air flows from the pressure side 134 through the second valve 124 to the outside.

In another example, the inflation and deflation may not require a sensor. Inflation and deflation can be undertaken manually, until a required state of inflation or deflation is achieved. Pushing the shuttle of the first valve 122 may be achieved by pulling a cable (e.g. located on a handle of the load carrying device) in a first direction to activate a first microswitch to push the shuttle of the first valve 122. Pushing the shuttle of the second valve 124 is achieved by pulling a cable in a second direction to activate a second microswitch to push the shuttle of the second valve 124. Pulling the cable in either direction activates the pump. In this example, inflation/deflation occurs while the cable is pulled and until the cable is released.

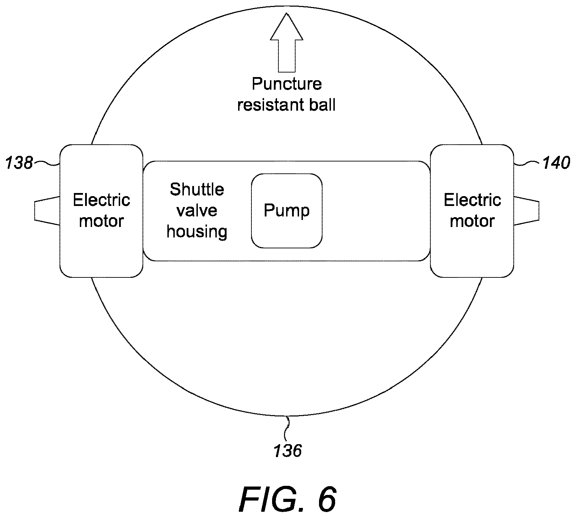

Referring to Fig. 6, there is shown a schematic drawing of a cross-section of a second roller 136. The second roller 136 comprises all of the features of the roller 104. Additionally, the second roller 136 comprises a second motor 138 and a third motor 140. The second motor 138 is located outside the second roller 136 adjacent to the first end cap 112. The third motor 140 is located outside the second roller 136 adjacent to the second end cap 114.

In use, the second motor 138 and the third motor 140 rotate the second roller 136, thereby moving a load carrying device to which the second roller 136 is attached.

Referring to Fig. 7a and Fig. 7b, there is shown the load carrying device 100. The load carrying device 100 is a pram. The pram comprises a load carrying portion 101, which comprises the frame 102. The load carrying portion 101 comprises a child carrying portion. The pram comprises the roller 104 as described above. The roller 104 is located at the front of the pram. The pram comprises a pair of wheels located at the rear of the pram. The pram comprises a handle 152.

In use, the pram is supported by the roller 104 and the pair of wheels 150. The roller 104 can be deflated as described above and the pram folded when storing or transporting the pram.

In the examples described above, the inflation arrangement drives inflation and deflation using the pump. This is advantageous as inflation and deflation takes place quickly and can be controlled easily. However, in other examples, simpler/cheaper inflation arrangements can be employed which do not use a pump. For example, the inflation arrangement may comprise a compressible foam (or other biasing means) which inflates the roller when a valve is open, and may be compressed (e.g. manually) by a user to deflate the roller when the valve is open. When using such an inflation arrangement, the valve can be closed to maintain the roller in an inflated or deflated state. Alternatively, the inflation arrangement may comprise a foldable structure for expanding and compressing the body 108, for example in the manner in which a typical umbrella/umbrella frame operates. In this situation, the body 108 need not be sealed, and the inflation is achieved by the folding of the structure rather than the pressure within the body 108. That is, in this latter example, inflation and deflation refer to expansion and compression of the overall size or shape of the body, and do not necessarily involve or required the use or air or similar. The expansion and compression can be purely or largely mechanical.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

The invention might include, relate to, and/or be defined by, the following aspects:
1. A load carrying device comprising a load carrying portion, a roller and an inflation arrangement in connection with the roller for selectively inflating the roller from a deflated state to an inflated state and for selectively deflating the roller from the inflated state to the deflated state, the roller rotatable to allow movement of the load carrying device, the roller comprising:
   an attachment arrangement attaching the roller to the load carrying portion so that the roller provides support to the load carrying portion; and
   a body for contacting a surface on which the load carrying device is located.
2. A load carrying device according to aspect 1, wherein the roller is a ball.
3. A load carrying device according to aspect 1 or 2, wherein the attachment arrangement comprises at least one connector connecting to an axle of the roller.
4. A load carrying device according to aspect 3, wherein the inflation arrangement provides the axle.
5. A load carrying device according to any preceding aspect, wherein the inflation arrangement is at least partially located within the roller.
6. A load carrying device according to aspect 5, wherein the inflation arrangement comprises a first guard member on a first end cap of the inflation arrangement and/or a second guard member on a second end cap of the inflation arrangement, the first guard member and/or second guard member extending outwardly from the inflation arrangement to protect the inflation arrangement from impact.
7. A load carrying device according to any preceding aspect, wherein the inflation arrangement is a module removable from the roller.
8. A load carrying device according to aspect 7, wherein the body of the roller comprises a first port, the inflation arrangement insertable into and removable from the roller through the first port.
9. A load carrying device according to aspect 8, wherein the body of the roller comprises a second port, wherein a first end cap of the inflation arrangement is located at the first port and a second end cap of the inflation arrangement is located at the second port.
10. A load carrying device according to aspect 9, wherein the second end cap has a larger diameter than the second port and a smaller diameter than the first port.
11. A load carrying device according to aspect 10, wherein the first end cap has a larger diameter than the first port.
12. A load carrying device according to any preceding aspect, wherein the inflation arrangement comprises a pump.
13. A load carrying device according to aspect 12, wherein the inflation arrangement comprises first and second valves, the pump switchable between:
   an inflating mode, wherein the pump supplies air to the body through the first and second valves to inflate the roller; and
   a deflating mode, wherein the pump draws air from the body through the second and first valves to deflate the roller.
14. A load carrying device according to aspect 13, wherein the first and second valves are shuttle valves, the first valve comprising:
   a first valve first opening, opening external to the roller;
   a first valve second opening, opening to a suction side of the pump; and
   a first valve third opening, opening to the body,
   wherein the second valve comprises:
      a second valve first opening, opening external to the roller;
      a second valve second opening, opening to a pressure side of the pump; and
      a second valve third opening, opening to the body,
      wherein in the inflating mode, the first valve permits fluid flow between the first valve first opening and the first valve second opening and the second valve permits fluid flow between the second valve second opening and the second valve third opening, and,
      in the deflating mode, the first valve permits fluid flow between the first valve third opening and the first valve second opening and the second valve permits fluid flow between the second valve second opening and the second valve first opening.
15. A load carrying device according to aspect 13 or 14, wherein the first valve and second valves are operable by mechanical linkage.
16. A load carrying device according to any of aspects 13 to 15, wherein each of the first valve and the second valve is located in a respective one of a first end cap and a second end cap of the inflation arrangement.
17. A load carrying device according to any of aspects 12 to 16, wherein the pump is driven by a first motor and operation of the first motor is controlled by a pressure sensor.
18. A load carrying device according to any preceding aspect, wherein the roller comprises a plurality of structural members.
19. A load carrying device according to aspect 18, wherein each of the structural member extends circumferentially around the roller when the roller is in the inflated state.
20. A load carrying device according to aspect 18 or 19, wherein each of the structural members extends parallel to the inflation arrangement when the ball is in the deflated state.
21. A load carrying device according to any preceding aspect comprising a second motor operable to rotate the roller to move the load carrying device.
22. A load carrying device according to aspect 21 comprising a third motor operable to rotate the roller to move the load carrying device, wherein the second motor is located at a first end cap of the inflation arrangement and the third motor is located at a second end cap of the inflation arrangement.
23. A load carrying device according to any preceding aspect, wherein the body is made from a puncture resistant material.
24. A load carrying device according to any preceding aspect, wherein the load carrying device is a pram.
25. A load carrying device according to any of aspects 1 to 23, wherein the load carrying device is a golf trolley.
26. A kit of parts for a load carrying device, the load carrying device comprising a load carrying portion and a roller, the kit of parts comprising:
   an attachment arrangement for attaching the roller to the load carrying portion so that the roller provides support to the load carrying portion;
   a body of the roller for contacting a surface on which the load carrying device is located; and
   an inflation arrangement in connection with the roller for selectively inflating the roller from a deflated state to an inflated state and selectively deflating the roller from the inflated state to the deflated state,
   wherein the roller is rotatable in use to allow movement of the load carrying device.
27. A roller for a load carrying device, the roller comprising:
   an arrangement for attaching the roller to a load carrying portion of the load carrying device so that the roller provides support to the load carrying portion;
   a body for contacting a surface on which the load carrying device is located; and
   an inflation arrangement for selectively inflating the roller from a deflated state to an inflated state and selectively deflating the roller from the inflated state to the deflated state,
   wherein the roller is rotatable in use to allow movement of the load carrying device.
28. A roller according to aspect 27, wherein the roller is a ball.
29. A roller according to aspect 27 or 28, wherein the attachment arrangement comprises at least one connector connecting to an axle of the roller.
30. A roller according to aspect 29, wherein the inflation arrangement provides the axle.
31. A roller according to any of aspects 27 to 30, wherein the inflation arrangement is at least partially located within the roller.
32. A roller according to aspect 31, wherein the inflation arrangement comprises a first guard member on a first end cap of the inflation arrangement and/or a second guard member on a second end cap of the inflation arrangement, the first guard member and/or second guard member extending outwardly from the inflation arrangement to protect the inflation arrangement from impact.
33. A roller according to any of aspects 27 to 32, wherein the inflation arrangement is a module removable from the roller.
34. A roller according to aspect 33, wherein the body of the roller comprises a first port, the inflation arrangement insertable into and removable from the roller through the first port.
35. A roller according to aspect 34, wherein the body of the roller comprises a second port, wherein a first end cap of the inflation arrangement is located at the first port and a second end cap of the inflation arrangement is located at the second port.
36. A roller according to aspect 35, wherein the second end cap has a larger diameter than the second port and a smaller diameter than the first port.
37. A roller according to aspect 36, wherein the first end cap has a larger diameter than the first port.
38. A roller according to any of aspects 27 to 37, wherein the inflation arrangement comprises a pump.
39. A roller according to aspect 38, wherein the inflation arrangement comprises first and second valves, the pump switchable between:
   an inflating mode, wherein the pump supplies air to the body through the first and second valves to inflate the roller; and
   a deflating mode, wherein the pump draws air from the body through the second and first valves to deflate the roller.
40. A roller according to aspect 39, wherein the first and second valves are shuttle valves, the first valve comprising:
   a first valve first opening, opening external to the roller;
   a first valve second opening, opening to a suction side of the pump; and
   a first valve third opening, opening to the body,
   wherein the second valve comprises:
      a second valve first opening, opening external to the roller;
      a second valve second opening, opening to a pressure side of the pump; and
      a second valve third opening, opening to the body,
      wherein in the inflating mode, the first valve permits fluid between the first valve first opening and the first valve second opening and the second valve permits fluid flow between the second valve second opening and the second valve third opening, and,
      in the deflating mode, the first valve permits fluid flow between the first valve third opening and the first valve second opening and the second valve permits fluid flow between the second valve second opening and the second valve first opening.
41. A roller according to aspect 39 or 40, wherein the first valve and second valves are operable by mechanical linkage
42. A roller according to any of aspects 39 to 41, wherein each of the first control valve and the second control valve is located in a respective one of a first end cap and a second end cap of the inflation arrangement.
43. A roller according to any of aspects 38 to 42, wherein the pump is driven by a first motor and operation of the first motor is controlled by a pressure sensor
44. A roller according to any of aspects 27 to 43, wherein the roller comprises a plurality of structural members.
45. A roller according to aspect 44, wherein each of the structural member extends circumferentially around the roller when the roller is in the inflated state.
46. A roller according to aspect 44 or 45, wherein each of the structural members extends parallel to the inflation arrangement when the ball is in the deflated state.
47. A roller according to any of aspects 27 to 46 comprising a second motor operable to rotate the roller to move the load carrying device.
48. A roller according to aspect 47 comprising a third motor operable to rotate the roller to move the load carrying device, wherein the second motor is located at a first end cap of the inflation arrangement and the third motor is located at a second end cap of the inflation arrangement.
49. A roller according to any of aspects 27 to 48, wherein the body is made from a puncture resistant material.
50. A pram comprising a load carrying portion and a roller, the roller rotatable to allow movement of the pram, the roller comprising an attachment arrangement attaching the roller to the load carrying portion so that the roller provides support to the load carrying portion in use, wherein the roller is a ball.

## Claims

1. A load carrying device (100) comprising a load carrying portion (102), a roller (104) and an inflation arrangement (110) in connection with the roller for selectively inflating the roller from a deflated state to an inflated state and for selectively deflating the roller from the inflated state to the deflated state, the roller rotatable to allow movement of the load carrying device, the roller comprising:
an attachment arrangement (106a, 106b) attaching the roller to the load carrying portion so that the roller provides support to the load carrying portion; and
a body (108) for contacting a surface on which the load carrying device is located,
the load carrying device **characterized by**:
a first motor (138) operable to rotate the roller to move the load carrying device.

2. A load carrying device according to claim 1, wherein the roller is a ball.

3. A load carrying device according to claim 1 or 2, wherein the inflation arrangement provides an axle of the roller.

4. A load carrying device according to any preceding claim, wherein the inflation arrangement is at least partially located within the roller,
and/or, optionally,
wherein the inflation arrangement comprises a pump.

5. A load carrying device according to claim 4, wherein the inflation arrangement comprises a first guard member on a first end cap of the inflation arrangement and/or a second guard member on a second end cap of the inflation arrangement, the first guard member and/or second guard member extending outwardly from the inflation arrangement to protect the inflation arrangement from impact.

6. A load carrying device according to any preceding claim, wherein the inflation arrangement is a module removable from the roller.

7. A load carrying device according to claim 6, wherein the body of the roller comprises a first port, the inflation arrangement insertable into and removable from the roller through the first port,
and, optionally, wherein the body of the roller comprises a second port, wherein a first end cap of the inflation arrangement is located at the first port and a second end cap of the inflation arrangement is located at the second port,
and, optionally, wherein the body of the roller is made from a puncture resistant material.

8. A load carrying device according to claim 7, wherein the second end cap has a larger diameter than the second port and a smaller diameter than the first port,
and, optionally, wherein the first end cap has a larger diameter than the first port.

9. A load carrying device according to any preceding claim that is dependent on claim 4, wherein the inflation arrangement comprises first and second valves, the pump switchable between:
an inflating mode, wherein the pump supplies air to the body through the first and second valves to inflate the roller; and
a deflating mode, wherein the pump draws air from the body through the second and first valves to deflate the roller,
and, optionally, wherein the first and second valves are shuttle valves, the first valve comprising:
a first valve first opening, opening external to the roller;
a first valve second opening, opening to a suction side of the pump; and
a first valve third opening, opening to the body,
wherein the second valve comprises:
a second valve first opening, opening external to the roller;
a second valve second opening, opening to a pressure side of the pump; and
a second valve third opening, opening to the body,
wherein in the inflating mode, the first valve permits fluid flow between the first valve first opening and the first valve second opening and the second valve permits fluid flow between the second valve second opening and the second valve third opening, and,
in the deflating mode, the first valve permits fluid flow between the first valve third opening and the first valve second opening and the second valve permits fluid flow between the second valve second opening and the second valve first opening.

10. A load carrying device according to claim 9, wherein the first valve and second valves are operable by mechanical linkage,
and, optionally, wherein each of the first valve and the second valve is located in a respective one of a first end cap and a second end cap of the inflation arrangement.

11. A load carrying device according to any preceding claim that is dependent on claim 4, wherein the pump is driven by a second motor and operation of the second motor is controlled by a pressure sensor,
and/or optionally, the load carrying device comprises a third motor operable to rotate the roller to move the load carrying device, wherein the first motor is located at a first end cap of the inflation arrangement and the third motor is located at a second end cap of the inflation arrangement.

12. A load carrying device according to any preceding claim, wherein the roller comprises a plurality of structural members
and, optionally, wherein each of the structural member extends circumferentially around the roller when the roller is in the inflated state,
and/or, optionally, wherein each of the structural members extends parallel to the inflation arrangement when the ball is in the deflated state.

13. A load carrying device according to any preceding claim, wherein the load carrying device is a pram or a golf trolley.

14. A kit of parts for a load carrying device (100), the load carrying device comprising a load carrying portion (102) and a roller (104), the kit of parts comprising:
an attachment arrangement (106a, 106b) for attaching the roller to the load carrying portion so that the roller provides support to the load carrying portion;
a body (108) of the roller for contacting a surface on which the load carrying device is located; and
an inflation arrangement (110) in connection with the roller for selectively inflating the roller from a deflated state to an inflated state and selectively deflating the roller from the inflated state to the deflated state,
wherein the roller is rotatable in use to allow movement of the load carrying device,
the kit **characterized by**:
a first motor (138) operable to rotate the roller to move the load carrying device.

15. A roller (104) for a load carrying device, the roller comprising:
an arrangement (106a, 106b) for attaching the roller to a load carrying portion of the load carrying device so that the roller provides support to the load carrying portion;
a body (108) for contacting a surface on which the load carrying device is located; and
an inflation arrangement (110) for selectively inflating the roller from a deflated state to an inflated state and selectively deflating the roller from the inflated state to the deflated state,
wherein the roller is rotatable in use to allow movement of the load carrying device,
the roller **characterized by**:
a first motor (138) operable to rotate the roller to move the load carrying device.
